(19) **Europäisches Patentamt**

**European Patent Office**

**Office européen des brevets**

(11) **EP 1 256 728 B1**

(12) **EUROPÄISCHE PATENTSCHRIFT**

(45) Veröffentlichungstag und Bekanntmachung des Hinweises auf die Patenterteilung:
**30.03.2005 Patentblatt 2005/13**

(51) Int Cl.$^7$: **F15B 1/24**

(21) Anmeldenummer: **02006129.7**

(22) Anmeldetag: **19.03.2002**

(54) **Gaskolbenspeicher und Verfahren zum Präparieren eines Gaskolbenspeichers**

Hydropneumatic piston accumulator and preparation method

Accumulateur oleopneumatique à piston et méthode de préparation

(84) Benannte Vertragsstaaten:
**DE FR GB IT**

(30) Priorität: **10.05.2001 DE 10122652**

(43) Veröffentlichungstag der Anmeldung:
**13.11.2002 Patentblatt 2002/46**

(73) Patentinhaber: **ROBERT BOSCH GMBH**
**70442 Stuttgart (DE)**

(72) Erfinder:
• **Schepp, Rene**
**71336 Waiblingen (DE)**

• **Ott, Harald**
**71229 Leonberg (DE)**

(56) Entgegenhaltungen:
**DE-A- 1 650 191       DE-A- 4 104 504**
**DE-A- 4 141 929       DE-A- 19 650 434**
**US-A- 5 524 871**

• **PATENT ABSTRACTS OF JAPAN vol. 1997, no. 07, 31. Juli 1997 (1997-07-31) & JP 09 072310 A (NOK CORP), 18. März 1997 (1997-03-18)**

## Beschreibung

Die Erfindung betrifft einen Gaskolbenspeicher mit einem im Wesentlichen zylindrischen Gehäuse und einem im Inneren des Gehäuses in axialer Richtung verschiebbar gelagerten Kolben, der das Innere des Gehäuses in einen Gasraum und einen Flüssigkeitsraum unterteilt, wobei die Mantelfläche des Kolbens mit einer Nut zur Flüssigkeitsaufnahme versehen ist. Die Erfindung betrifft ferner ein Verfahren zum Präparieren eines Gaskolbenspeichers mit einem im Wesentlichen zylindrischen Gehäuse und einem im Inneren des Gehäuses in axialer Richtung verschiebbar gelagerten Kolben, der das Innere des Gehäuses in einen Gasraum und einen Flüssigkeitsraum unterteilt, wobei die Mantelfläche des Kolbens mit einer Nut zur Flüssigkeitsaufnahme versehen ist.

## Stand der Technik

Gattungsgemäße Gaskolbenspeicher kommen beispielsweise bei hydraulischen Fahrzeugbremsanlagen zum Einsatz, wie zum Beispiel bei elektrohydraulischen Bremssystemen (EHB). Die Gaskolbenspeicher dienen dem Speichern hydraulischer Energie, so dass die Bremsanlage unter Einsatz von hydraulischer Fremdenergie betrieben werden kann.

Bei Gaskolbenspeichern ist darauf zu achten, dass der Gasraum gegen den Flüssigkeitsraum abgedichtet ist. Bei unzureichender Abdichtung kann Gas in den Flüssigkeitsraum übertreten und somit in das Bremssystem eines Kraftfahrzeugs gelangen. Letztlich kann hierdurch die Bremswirkung verschlechtert werden. Zum Zwecke einer solchen Abdichtung des Gasraums gegen den Flüssigkeitsraum werden ringförmige Dichtungen an der Mantelfläche des Kolbens vorgesehen, so dass ein Übertritt vom Gas durch den Spalt zwischen Gehäuse und Kolben verhindert wird. Um die Abdichtung zu verbessern, wurde bereits vorgeschlagen, zwischen zwei axial voneinander entfernten Dichtungen einen Ringraum vorzusehen, welcher mit Flüssigkeit gefüllt ist. Zum Befüllen des Ringraums mit Flüssigkeit wurde dabei eine Verbindung zwischen dem Flüssigkeitsraum und dem Ringraum verwendet.

Nachteilig an der beschriebenen Lösung des Standes der Technik ist, dass die Befüllung des als Nut ausgebildeten Ringraums vom Zustand des Gaskolbenspeichers abhängt. Beispielsweise wird die Befüllung des Ringraums durch den in dem Flüssigkeitsraum herrschenden Druck beeinflusst. Letztlich ist es also nicht möglich, bei jedem Zustand das Gaskolbenspeichers optimale Möglichkeiten für die Befüllung des Ringraums zur Verfügung zu stellen. Ferner muss im Ringraum dieselbe Flüssigkeit wie im Arbeitsraum verwendet werden.

Eine andere Lösung, zum Befüllen des Ringraums ist aus dem Dokument DE-A- 4104504 bekannt.

## Vorteile der Erfindung

Die Erfindung baut auf dem gattungsgemäßen Gaskolbenspeicher dadurch auf, dass das Gehäuse mindestens eine verschließbare Öffnung aufweist, dass die Nut durch die mindestens eine Öffnung befüllbar ist und dass die Öffnung nach dem Füllen der Nut dicht verschlossen ist. Somit ist es möglich, die Befüllung der Nut von außen durch das Gehäuse vorzunehmen. Das anschließende dichte Verschließen der Nut ermöglicht eine hohe Betriebssicherheit bei gleichzeitig geringen Herstellungskosten. Die Befüllung ist damit insbesondere unabhängig von den Verhältnissen im Flüssigkeitsraum des Gaskolbenspeichers. Es ist sogar möglich, die Nut mit einer anderen Flüssigkeit als den Flüssigkeitsraum zu befüllen. Dies kann sinnvoll sein, da die Flüssigkeit in der Nut beispielsweise zur Schmierung der Kolbenbewegung dienen kann, so dass die Flüssigkeit im Hinblick darauf optimiert ausgewählt werden kann.

Der erfindungsgemäße Gaskolbenspeicher ist besonders vorteilhaft dadurch weitergebildet, dass eine Feder vorgesehen ist, die den Kolben in Richtung auf den Flüssigkeitsraum mit Kraft beaufschlagt. Es liegt somit ein Kräftegleichgewicht zwischen der Summe von Gasfederkraft und Druckfederkraft und der Flüssigkeitskraft vor. Die Gasfederkraft plus der Druckfederkraft entspricht der Flüssigkeitskraft. Hieraus ergibt sich, dass die Flüssigkeitskraft stets größer ist als die durch den Gasdruck aufgebrachte Kraft. Tritt somit ein Defekt an den Dichtungen des Gaskolbenspeichers auf, so wird sich Fluid im Gasraum ansammeln, und es wird kein Gas in den Bremskreislauf gelangen. Aufgrund der Sperrflüssigkeit in der Nut wird das Partialdruckgefälle zwischen Gas- und Fluidseite auf einem sehr geringen Niveau gehalten, so dass letztlich das Durchdringen von Gas durch die Dichtungen aufgrund der Sperrflüssigkeit weitgehend vermieden wird.

Die Erfindung hat besondere Vorteile dadurch, dass das Gehäuse ein Zylinderrohr, einen den Gasraum verschließenden Gasverschlussdeckel und einen den Flüssigkeitsraum verschließenden Fluidverschlussdeckel aufweist. Das Gehäuse ist somit bei dieser Ausführungsform mindestens aus drei Komponenten zusammengesetzt, wobei die Verbindung der Bauteile durch Laserschweißen oder durch Elektrodenstrahlschweißen realisiert sein kann.

Insbesondere ist es vorteilhaft, wenn der Gasverschlussdeckel eine verschließbare Öffnung aufweist. Durch diese verschließbare Öffnung lässt sich im geöffneten Zustand der Gasraum mit Gas befüllen. Nachfolgend wird die Öffnung gasdicht verschlossen.

In diesem Zusammenhang ist es von Vorteil, dass die Öffnung in dem Gasverschlussdeckel gasdicht mit einem Verschlussstopfen mittels Reib- beziehungsweise Kondensatorendladungsschweißverfahren verschließbar ist. Diese Verfahren haben sich im Zusammenhang mit dem Verschließen von Gasräumen aufgrund der hohen Gasdichtigkeit und durch den gemessen am Erfolg geringen Aufwand bewährt.

Es ist besonders zu bevorzugen, dass der Kolben mit zwei Dichtungspaketen ausgestattet ist, die jeweils einen Dichtring und einen Stütz-/Laufring umfassen. Auf diese Weise wird sowohl vermieden, dass Flüssigkeit aus dem Flüssigkeitsraum in den Zwischenraum zwischen Kolben und Gehäuse eindringt, als auch, dass Gas in den Zwischenraum zwischen Kolben und Gehäuse eindringt.

Damit im Zusammenhang ist es besonders nützlich, dass die Nut zur Flüssigkeitsaufnahme als Ringnut zwischen den Dichtungspaketen ausgebildet ist. Aufgrund der Sperrflüssigkeit in der Ringnut kann das Partialdruckgefälle zwischen Gas- und Fluidseite auf einem sehr geringen Niveau gehalten werden. Somit wird die Permeation des Gases durch die Dichtungspakete weitgehend vermieden.

In einer weiteren bevorzugten Ausführungsform ist die Öffnung des Gehäuses, durch welche die Nut befüllbar ist, mit einem Verschlussstopfen durch Reib- beziehungsweise Kondensatorendladungsschweißverfahren verschließbar. Die Öffnung des Gehäuses zum Befüllen der Nut kann also in ähnlicher Weise flüssigkeitsdicht verschlossen werden wie auch der Gasraum nach seiner Befüllung gasdicht verschlossen werden kann.

Besonders vorteilhaft ist es, wenn die Öffnung des Gehäuses, durch welche die Nut befüllbar ist, dem Evakuieren der Nut vor dem Befüllen der Nut dient. Auf diese Weise ist eine weitere Öffnung im Gehäuse entbehrlich, durch welche man ansonsten das in der Nut vorhandene Gas beim Befüllen der Nut mit Flüssigkeit austreiben könnte. Gleichwohl liegt auch die Ausführungsform mit zwei Öffnungen im Gehäuse im Rahmen der vorliegenden Erfindung.

In einer besonderen Ausführungsform der vorliegenden Erfindung ist diese so weitergebildet, dass auf der dem Flüssigkeitsraum zugewandten Stirnseite des Kolbens Dichtungsmittel vorgesehen sind, die bei einem Druckabfall im Flüssigkeitsraum ein Austreten von Gas in ein mit dem Gaskolbenspeicher verbundenes System verhindern. Derartige Dichtungsmittel an der Stirnseite des Kolbens bringen zusätzliche Sicherheit bei defekten Dichtungselementen sowie bei sehr geringem Arbeitsdruck. Aufgrund der Dichtungsmittel an der Stirnseite des Kolbens wird gewährleistet, dass auch bei vollständigem Druckabfall im Flüssigkeitsraum kein Gas in den Bremskreislauf gelangen kann. Ein Defekt der Dichtungen hat zur Folge, dass Fluid in den Gasraum eindringt. Durch die zusätzliche Kraft der Druckfeder wird der Kolben an die obere Endlage vorfahren. Nun kommt die Dichtung an der Stirnseite des Kolbens zum Einsatz und sperrt den Zylinder so ab, dass kein Gas in den Bremskreislauf gelangen kann. Die Dichtungsmittel an der Stirnseite des Kolbens sind ebenfalls bei einem Defekt im Stillstand des Fahrzeugs, das heißt in einem Zustand, in dem das Hydroaggregat keinen Druck mehr aufbaut, und bei undichten Ein- und Auslassventilen nützlich, da sich hier der Arbeitsdruck mit der Zeit abbaut und die Feder ein Verschieben des Kolbens in die obere Endlage bewirkt. In diesem Zustand kommt das Dichtelement an der Stirnseite des Kolbens abdichtend zur Wirkung.

Die Erfindung baut auf dem gattungsgemäßen Verfahren dadurch auf, dass die Nut durch mindestens eine Öffnung des Gehäuses befüllt wird und nachfolgend die Öffnung dicht verschlossen wird. Auf diese Weise wird eine einfache Befüllung der Nut ermöglicht, wobei durch das nachfolgende dichte Verschließen zudem eine hohe Betriebssicherheit bei gleichzeitig geringen Herstellungskosten gewährleistet ist. Auch kann das Befüllen unabhängig von den Verhältnissen im Flüssigkeitsraum des Gaskolbenspeichers erfolgen. Die Nut kann bei diesem Verfahren auch mit einer anderen Flüssigkeit befüllt werden als im Flüssigkeitsraum, das heißt im Arbeitsraum des Gaskolbenspeichers, verwendet wird. Auf diese Weise kann die Flüssigkeit besonders im Hinblick auf Zusatzaufgaben neben der abdichtenden Wirkung optimiert sein, beispielsweise zum Schmieren der Kolbendichtungen.

Besonders nützlich ist es, wenn vor dem Befüllen der Nut durch die mindestens eine Öffnung des Gehäuses die Nut durch die mindestens eine Öffnung des Gehäuses evakuiert wird. Somit hat die Öffnung eine doppelte Funktion. Es ist allerdings auch möglich, eine weitere Öffnung im Gehäuse vorzusehen, durch welche man das in der Nut vorhandene Gas beim Befüllen der Nut mit Flüssigkeit austreibt.

Ebenfalls ist das Verfahren besonders vorteilhaft dadurch weitergebildet, dass nach dem Befüllen der Nut durch die mindestens eine Öffnung die mindestens eine Öffnung mittels Reib- beziehungsweise Kondensatorendladungsschweißverfahren verschlossen wird. Diese Verfahren haben sich im Zusammenhang mit dem Verschließen von Flüssigkeitsräumen durch ihre Zuverlässigkeit bewährt.

Ebenfalls ist es nützlich, dass der Gasraum durch eine Öffnung in einem Gasverschlussdeckel befüllt wird und dass die Öffnung in dem Gasverschlussdeckel gasdicht mit einem Verschlussstopfen mittels Reib- beziehungsweise Kondensatorendladungsschweißverfahren verschlossen wird. Die bewährten Verfahren dienen somit auch in vorteilhafter Weise dem Verschließen des Gasraums.

Der Erfindung liegt die Erkenntnis zugrunde, dass die Befüllung der Ringnut mit Flüssigkeit von der Außenseite des Gaskolbenspeichers her besonders nützlich ist. Zum einen kann man beliebige Flüssigkeiten zum Befüllen der Nut verwenden, das heißt, man ist insbesondere nicht mehr auf die Verwendung der Flüssigkeit im Arbeitsraum des Gaskolbenspeichers beschränkt. Weiterhin kann die Befüllung unabhängig vom Druckzustand im Flüssigkeitsraum erfolgen. Die Bereitstellung einer Sperrflüssigkeit hat den Vorteil, dass das Partialdruckgefälle zwischen der Gas- und der Fluidseite auf einem sehr geringen Niveau bleibt. Somit wird eine Permeation von Gas stark herabgesetzt.

**Zeichnungen**

Die Erfindung wird nun mit Bezug auf die begleitenden Zeichnungen anhand bevorzugter Ausführungsformen beispielhaft erläutert.

Dabei zeigt:

Figur 1 eine teilweise geschnittene perspektivische Ansicht eines erfindungsgemäßen Gaskolbenspeichers;

Figur 2 eine Schnittansicht eines erfindungsgemäßen Gaskolbenspeichers;

Figur 3 ein Detail aus Figur 2;

Figur 4 eine teilweise geschnittene perspektivische Ansicht einer weiteren Ausführungsform eines erfindungsgemäßen Gaskolbenspeichers; und

Figur 5 eine Schnittansicht der weiteren Ausführungsform des erfindungsgemäßen Gaskolbenspeichers.

**Beschreibung der Ausführungsbeispiele**

Bei der nachfolgenden detaillierten Beschreibung der Zeichnungen bezeichnen gleiche Bezugszeichen gleiche oder vergleichbare Komponenten.

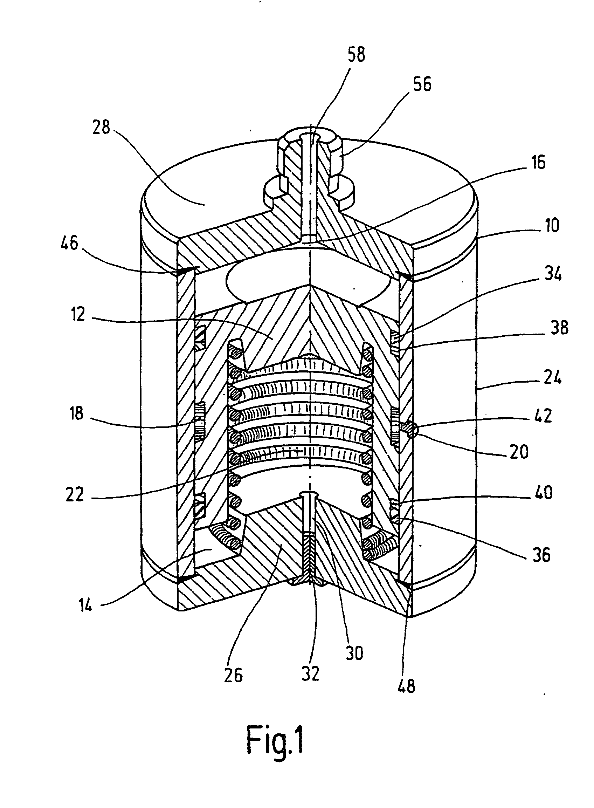

Figur 1 zeigt eine teilweise geschnittene perspektivische Ansicht eines erfindungsgemäßen Gaskolbenspeichers. Der Gaskolbenspeicher hat ein Gehäuse 10. Im Inneren des Gehäuses 10 befindet sich ein Kolben 12. Der Kolben 12 unterteilt das Innere des Gehäuses 10 in einen Gasraum 14 und einen Flüssigkeitsraum 16. Das Gehäuse 10 wird durch ein Zylinderrohr 24, einen den Gasraum 14 abschließenden Gasverschlussdeckel 26 und einen den Flüssigkeitsraum 16 abschließenden Fluidverschlussdeckel 28 gebildet. Der Gasverschlussdeckel 26 und der Fluidverschlussdeckel 28 sind über Laserschweißverbindungen oder Elektrodenstrahlschweißverbindungen 46, 48 mit dem Zylinderrohr 24 verbunden. Der Fluidverschlussdeckel 28 hat einen Ansatzstutzen 56, der eine Öffnung 58 aufweist und mit einem Gewinde versehen sein kann. Über diesen Ansatzstutzen 56 wird der Gaskolbenspeicher beispielsweise mit einer Bremsanlage verbunden. Der Gasverschlussdeckel 26 weist ebenfalls eine Bohrung 30 auf.

Über diese Bohrung 30 wird der Gasraum 14 mit Gas befüllt. Nach der Befüllung des Gasraums 14 mit Gas über die Bohrung 30 wird der Gasverschlussdeckel 26 mit einem Verschlussstopfen 32 gasdicht verschlossen. Zu diesem Zweck wird vorzugsweise ein Reib- beziehungsweise ein Kondensatorendladungsschweißverfahren verwendet. Der Druck in dem Gasraum 14 wird durch den Druck einer Druckfeder 22 unterstützt. Der Gasraum 14 wird gegen den Flüssigkeitsraum 16 über Dichtungspakete 34, 38; 36, 40 abgedichtet, wobei diese jeweils in der Nähe der Stirnseiten des Kolbens 12 angeordnet sind. Jedes dieser Dichtungspakete 34, 38; 36, 40 weist einen Dichtring 34, 36 und einen Stütz-/Laufring 38, 40 auf. Etwa in der Mitte des Kolbens 12 befindet sich eine Nut 18 zur Aufnahme einer Sperrflüssigkeit. Bei der dargestellten Lage des Kolbens 12 befindet sich in der Höhe der Nut 18 eine Öffnung 20 in dem Zylinderrohr 24, so dass die Nut 18 über die Öffnung 20 in dem Gehäuse 10 evakuiert beziehungsweise mit Flüssigkeit befüllt werden kann. Die Bohrung wird nach der Befüllung mit einem Verschlussstopfen 42 durch ein Reib- beziehungsweise ein Kondensatorendladungsschweißverfahren dicht verschlossen.

Der Gaskolbenspeicher gemäß Figur 1 arbeitet wie folgt. Das Gasvolumen im Gasraum 14 und die Druckfeder 22 im Innenraum des Gehäuses 10 bestimmen die Federungseigenschaften des Gaskolbenspeichers. Das Gas und die Feder werden über das in dem Flüssigkeitsraum 16 befindliche Fluid entsprechend einer jeweils aktuellen Anforderung entlastet beziehungsweise verdichtet, beispielsweise durch das Wiederaufladen durch eine Pumpe. Der Gaskolbenspeicher speichert über das Gas als kompressibles Medium in dem Gasraum 14 und die Druckfeder 22 ein bestimmtes Flüssigkeitsvolumen im als Arbeitsraum wirkenden Flüssigkeitsraum 16, und er gibt das Fluid bei Bedarf wieder ab.

In dem Gaskolbenspeicher gemäß Figur 1 liegt ein Kräftegleichgewicht vor, da die Gasfederkraft ($F_{Gas}$) und die Druckfederkraft ($F_{Feder}$) der von der Flüssigkeit aufgebrachten Kraft ($F_{Fluid}$) entsprechen müssen:

$$F_{Gas} + F_{Feder} = F_{Fluid}.$$

Hieraus ergibt sich, dass die Flüssigkeitskraft ($F_{Fluid}$) stets größer ist als die Gasfederkraft ($F_{Gas}$):

$$F_{Fluid} > F_{Gas}.$$

Somit wird sich bei einem Defekt der Dichtungspakete 34, 38; 36, 40 Fluid im Gasraum 14 ansammeln; es wird jedoch nicht zu einem Übertritt von Gas in den Flüssigkeitsraum 16 und mithin in das Bremssystem kommen. Durch einen Druckverlust im Flüssigkeitsraum 16 wird sich der Kolben durch die Kraft der Feder 22 nach oben bewegen und letztlich die Öffnung 58 des Flüssigkeitsraums 16 verschließen.

Die in der Ringnut 18 vorgesehene Flüssigkeit wirkt als Sperrflüssigkeit. Diese hält das Partialdruckgefälle zwischen dem Gasraum 14 und dem Flüssigkeitsraum 16 auf einem sehr geringen Niveau. Auf diese Weise wird das Durchdringen von Gas durch die Dichtungspakete 34, 38; 36, 40 vermieden. Weiterhin hat die Sperrflüssigkeit in der Ringnut 18 die Aufgabe, die Dichtungspakete 34, 38; 36, 40 zusätzlich mit Schmierflüssigkeit zu versorgen, unter anderem, um Beschädigungen zu verhindern. Das System ist aufgrund der Sperrflüssigkeit sehr zuverlässig, da diese bei entspannter Fluidseite verhindert, dass kleine Gasmoleküle (beispielsweise $N_2$) durch das ansonsten dichte Dichtungssystem, welches durch die Dichtungspakete 34, 38; 36, 40 realisiert ist, kriechen können.

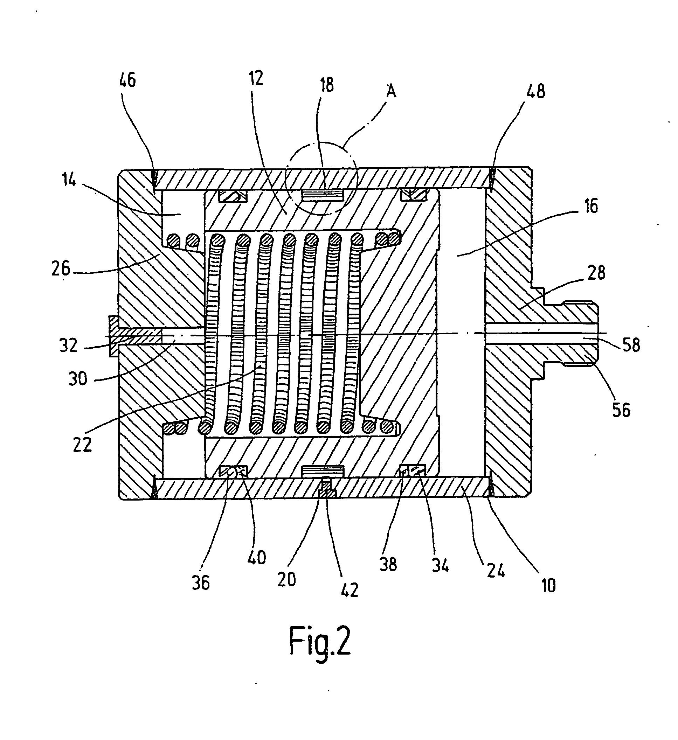

Figur 2 zeigt eine Schnittansicht eines erfindungsgemäßen Gaskolbenspeichers. In dieser Schnittansicht sind besonders gut die Dichtungspakete 34, 38; 36, 40 zu erkennen. Ferner erkennt man die Ringnut 18, die Öffnung 20, über die die Ringnut 18 evakuiert und befüllt wird, sowie den Verschlussstopfen 42 für die Öffnung 20 zur Befüllung der Ringnut 18.

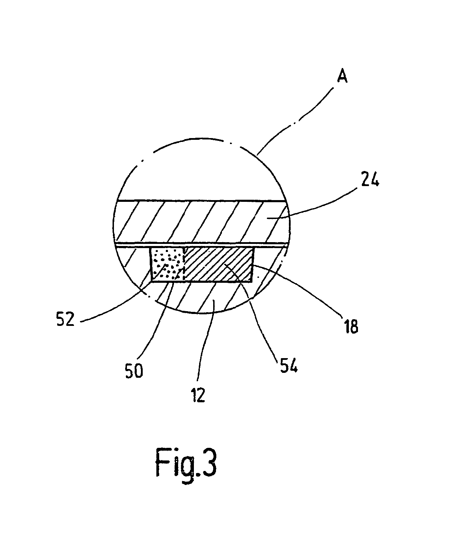

Figur 3 zeigt ein in Figur 2 mit A gekennzeichnetes Detail. Zu erkennen sind der Zylindermantel 24 und der Kolben 12. Der Kolben 12 hat eine Ringnut 18, die mit Flüssigkeit gefüllt ist. Mit einer unterbrochenen Linie 50 ist eine Sperrbarriere angedeutet, die einen mit Gas gefüllten Raum 52 auf der linken Seite der Sperrbarriere 50 von einem mit Flüssigkeit gefüllten Raum 54 auf der rechten Seite der Sperrbarriere 50 trennt. Die mit Gas gesättigte Flüssigkeit im Raum 54 verhindert somit den Übertritt von Gas aus dem Raum 52 und letztlich aus dem in den Figuren 1 und 2 dargestellten Gasraum 14 in den Flüssigkeitsraum 16 und somit in weitere Komponenten der Bremsanlage eines Kraftfahrzeugs.

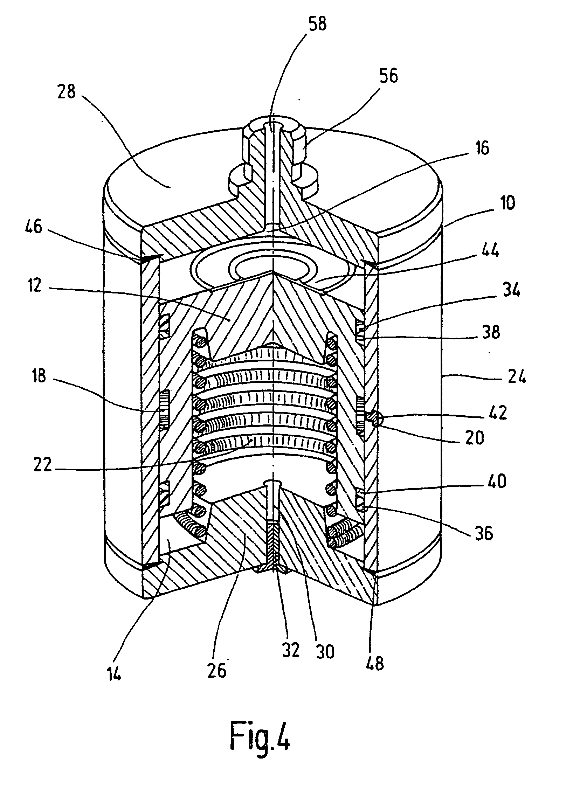

Figur 4 zeigt eine perspektivische teilweise geschnittene Ansicht einer weiteren Ausführungsform eines Gaskolbenspeichers. Diese Ausführungsform entspricht weitgehend der Ausführungsform gemäß den Figuren 1 bis 3. Allerdings sind zusätzlich an der Stirnseite des Kolbens 12 Dichtmittel 44 vorgesehen.

Diese Dichtmittel 44 haben eine zusätzliche Sicherheitsfunktion. Bei defekten Dichtungspaketen 34, 38; 36, 40 beziehungsweise bei einem sehr geringen Arbeitsdruck in dem Flüssigkeitsraum 16 kann eine zusätzliche Absicherung erreicht werden. Insbesondere wird erreicht, dass aufgrund der Dichtmittel 44 niemals Gas in das Bremssystem übertreten kann. Geht man von einem Defekt der Dichtungspakete 34, 38; 36, 40 aus, so wird Fluid aus dem Flüssigkeitsraum 16 in den Gasraum 14 übertreten. Durch die zusätzliche Kraft der Druckfeder 22 wird der Kolben 12 in seine obere Endlage vorfahren. Nun kommt die Kolbendichtung 44 zum Einsatz und sperrt das Gehäuse 10 so ab, dass kein Gas in den Bremskreislauf gelangen kann. Bei einem Defekt der Dichtungspakete 34, 38; 36, 40 im Stillstand des Fahrzeugs, so dass das Hydroaggregat keinen Druck mehr aufbaut, und bei undichten Ein- und Auslassventilen baut sich der Arbeitsdruck im Flüssigkeitsraum 16 mit der Zeit ab, und die Feder 22 bewirkt ein Verschieben des Kolbens 12 in die obere Endlage. Nun kommt ebenfalls das Dichtmittel 44 an der Stirnseite des Kolbens 12 zum Einsatz.

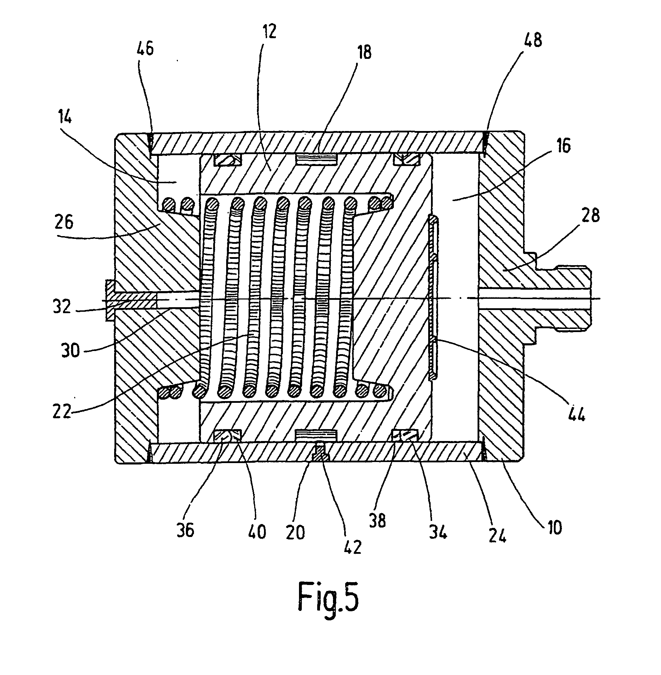

Figur 5 zeigt eine Schnittansicht der Gaskolbenspeicherausführung gemäß Figur 4. Auch hier sind die Dichtelemente 44 als besonderes Merkmal dieser Ausführungsform zu erkennen. Ferner erkennt man wieder besonders deutlich die Dichtungspakete 34, 38; 36, 40, die Ringnut 18, die Öffnung 20 in dem Zylinderrohr 24 und den Verschlussstopfen 42 für die Öffnung 20.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung, wie in den Ansprüchen definiert, zu verlassen.

**Patentansprüche**

1. Gaskolbenspeicher mit

   - einem im Wesentlichen zylindrischen Gehäuse (10) und

   - einem im Inneren des Gehäuses (10) in axialer Richtung verschiebbar gelagerten Kolben (12), der das Innere des Gehäuses (10) in einen Gasraum (14) und einen Flüssigkeitsraum (16) unterteilt,

   - wobei die Mantelfläche des Kolbens (12) mit einer Nut (18) zur Flüssigkeitsaufnahme versehen ist,

   **dadurch gekennzeichnet,**

   - **dass** das Gehäuse (10) mindestens eine verschließbare Öffnung (20) aufweist,

   - **dass** die Nut (18) durch die mindestens eine Öffnung (20) befüllbar ist und

   - **dass** die Öffnung nach dem Füllen der Nut (18) dicht verschlossen ist.

2. Gaskolbenspeicher nach Anspruch 1, **dadurch gekennzeichnet, dass** eine Feder (22) vorgesehen ist, die den Kolben (12) in Richtung auf den Flüssigkeitsraum (16) mit Kraft beaufschlagt.

3. Gaskolbenspeicher nach einem der vorangehenden Ansprüche, **dadurch gekennzeichnet, dass** das Gehäuse (10) ein Zylinderrohr (24), einen den Gasraum (14) verschließenden Gasverschlussdeckel (26) und einen den Flüssigkeitsraum (16) verschließenden Fluidverschlussdeckel (28) aufweist.

4. Gaskolbenspeicher nach Anspruch 3, **dadurch ge-**

**kennzeichnet, dass** der Gasverschlussdeckel (26) eine verschließbare Öffnung (30) aufweist.

5. Gaskolbenspeicher nach Anspruch 4, **dadurch gekennzeichnet, dass** die Öffnung (30) in dem Gasverschlussdeckel (26) gasdicht mit einem Verschlussstopfen (32) mittels Reib- beziehungsweise Kondensatorendladungsschweißverfahren verschließbar ist.

6. Gaskolbenspeicher nach einem der vorangehenden Ansprüche, **dadurch gekennzeichnet, dass** der Kolben (12) mit zwei Dichtungspaketen (34, 38; 36, 40) ausgestattet ist, die jeweils einen Dichtring (34, 36) und einen Stütz-/Laufring (38, 40) umfassen.

7. Gaskolbenspeicher nach Anspruch 6, **dadurch gekennzeichnet, dass** die Nut (18) zur Flüssigkeitsaufnahme als Ringnut zwischen den Dichtungspaketen (34, 38; 36, 40) ausgebildet ist.

8. Gaskolbenspeicher nach einem der vorangehenden Ansprüche, **dadurch gekennzeichnet, dass** die Öffnung (20) des Gehäuses (10), durch welche die Nut (18) befüllbar ist, mit einem Verschlussstopfen (42) durch Reib- beziehungsweise Kondensatorendladungsschweißverfahren verschließbar ist.

9. Gaskolbenspeicher nach einem der vorangehenden Ansprüche, **dadurch gekennzeichnet, dass** die Öffnung (20) des Gehäuses (10), durch welche die Nut (18) befüllbar ist, dem Evakuieren der Nut (18) vor dem Befüllen der Nut (18) dient.

10. Gaskolbenspeicher nach einem der vorangehenden Ansprüche, **dadurch gekennzeichnet, dass** auf der dem Flüssigkeitsraum (16) zugewandten Stirnseite des Kolbens (12) Dichtungsmittel (44) vorgesehen sind, die bei einem Druckabfall im Flüssigkeitsraum ein Austreten von Gas in ein mit dem Gaskolbenspeicher verbundenes System verhindern.

11. Verfahren zum Präparieren eines Gaskolbenspeichers mit einem im Wesentlichen zylindrischen Gehäuse (10) und einem im Inneren des Gehäuses (10) in axialer Richtung verschiebbar gelagerten Kolben (12), der das Innere des Gehäuses in einen Gasraum (14) und einen Flüssigkeitsraum (16) unterteilt, wobei die Mantelfläche des Kolbens (12) mit einer Nut (18) zur Flüssigkeitsaufnahme versehen ist, **dadurch gekennzeichnet, dass** die Nut (18) durch mindestens eine Öffnung (20) des Gehäuses (10) befüllt wird und nachfolgend die Öffnung (20) dicht verschlossen wird.

12. Verfahren nach Anspruch 11, **dadurch gekenn-**

**zeichnet, dass** vor dem Befüllen der Nut (18) durch die mindestens eine Öffnung (20) des Gehäuses (10) die Nut (18) durch die mindestens eine Öffnung (20) des Gehäuses (10) evakuiert wird.

13. Verfahren nach Anspruch 11 oder 12, **dadurch gekennzeichnet, dass** nach dem Befüllen der Nut (18) durch die mindestens eine Öffnung (20) die mindestens eine Öffnung (20) mittels Reib- beziehungsweise Kondensatvrendladungsschweißverfahren verschlossen wird.

14. Verfahren nach einem der Ansprüche 11 bis 13, **dadurch gekennzeichnet,**

 - **dass** der Gasraum (14) durch eine Öffnung (30) in einem Gasverschlussdeckel (26) befüllt wird, und
 - dass die Öffnung (30) in dem Gasverschlussdeckel (26) gasdicht mit einem Verschlussstopfen (32) mittels Reib- beziehungsweise Kondensatorendladungsschweißverfahren verschlossen wird.

**Claims**

1. Hydropneumatic piston accumulator, with

 - an essentially cylindrical housing (10), and
 - a piston (12) which is mounted displaceably in the axial direction in the interior of the housing (10) and which subdivides the interior wall of the housing (10) into a gas space (14) and a fluid space (16),
 - the outer surface area of the piston (12) being provided with a groove (18) for fluid reception,

 **characterized**

 - **in that** the housing (10) has at least one closable orifice (20),
 - **in that** the groove (18) can be filled through the at least one orifice (20), and
 - **in that** the orifice is sealingly closed after the filling of the groove (18).

2. Hydropneumatic piston accumulator according to Claim 1, **characterized in that** a spring (22) is provided, which acts upon the piston (12) with force in the direction of the fluid space (16).

3. Hydropneumatic piston accumulator according to one of the preceding claims, **characterized in that** the housing (10) has a cylindrical tube (24), a gas closing cover (26) closing the gas space (14) and a fluid closing cover (28) closing the fluid space (16).

**4.** Hydropneumatic piston accumulator according to Claim 3, **characterized in that** the gas closing cover (26) has a closable orifice (30).

**5.** Hydropneumatic piston accumulator according to Claim 4, **characterized in that** the orifice (30) in the gas closing cover (26) can be closed, gas-tight, with a closing plug (32) by means of a friction or condenser discharge welding method.

**6.** Hydropneumatic piston accumulator according to one of the preceding claims, **characterized in that** the piston (12) is equipped with two sealing packs (34, 38; 36, 40) which each comprise a sealing ring (34, 36) and a supporting/running ring (38, 40).

**7.** Hydropneumatic piston accumulator according to Claim 6, **characterized in that** the groove (18) for fluid reception is designed to have an annular groove between the sealing packs (34, 38; 36, 40).

**8.** Hydropneumatic piston accumulator according to one of the preceding claims, **characterized in that** the orifice (20) of the housing (10) through which the groove (18) can be filled can be closed with a closing plug (42) by means of a friction or condenser discharge welding method.

**9.** Hydropneumatic piston accumulator according to one of the preceding claims, **characterized in that** the orifice (20) of the housing (10) through which the groove (18) can be filled serves for evacuating the groove (18) before the filling of the groove (18).

**10.** Hydropneumatic piston accumulator according to one of the preceding claims, **characterized in that**, on that end face of the piston (12) which faces the fluid space (16), sealing means (44) are provided which, in the event of a pressure drop in the fluid space, prevent an escape of gas into a system connected to the hydropneumatic piston accumulator.

**11.** Method for the preparation of a hydropneumatic piston accumulator with an essentially cylindrical housing (10) and a piston (12) which is mounted displaceably in the axial direction in the interior of the housing (10) and which subdivides the interior wall of the housing into a gas space (14) and a fluid space (16), the outer surface area of the piston (12) being provided with a groove (18) for fluid reception, **characterized in that** the groove (18) is filled through at least one orifice (20) of the housing (10), and the orifice (20) is subsequently sealingly closed.

**12.** Method according to Claim 11, **characterized in that** the groove (18) is evacuated through the at least one orifice (20) of the housing (10) before the filling of the groove (18) through the at least one orifice (20) of the housing (10).

**13.** Method according to Claims 11 or 12, **characterized in that**, after the filling of the groove (18) through the at least one orifice (20), the at least one orifice (20) is closed by means of a friction or condenser discharge welding method.

**14.** Method according to one of Claims 11 to 13, **characterized**

 - **in that** the gas space (14) is filled through an orifice (30) in a gas closing cover (26), and
 - **in that** the orifice (30) in the gas closing cover (26) is closed, gas-tight, with a closing plug (32) by means of a friction or condenser discharge welding method.

**Revendications**

**1.** Accumulateur pneumatique à piston comportant

 - un boîtier (10) essentiellement cylindrique et
 - un piston (12) logé de manière mobile en sens axial à l'intérieur du boîtier (10), lequel subdivise l'intérieur du boîtier (10) en un compartiment à gaz (14) et un compartiment à liquide (16),
 - la surface de la gaine du piston (12) étant munie d'une rainure (18) pour recueillir le liquide,

 **caractérisé en ce que**

 - le boîtier (10) présente au moins une ouverture (20) pouvant être obturée,
 - la rainure (18) peut être remplie par l'au moins une ouverture (20),
 - l'ouverture est obturée de manière étanche une fois la rainure (18) remplie.

**2.** Accumulateur pneumatique à piston selon la revendication 1,
**caractérisé par**
un ressort (22) qui contraint le piston (12) vers le compartiment à liquide (16).

**3.** Accumulateur pneumatique à piston selon l'une quelconque des revendications précédentes,
**caractérisé en ce que**
le boîtier (10) présente un tube cylindrique (24), un couvercle d'obturation des gaz (26) obturant le compartiment à gaz (14) et un couvercle d'obturation des liquides (28) obturant le compartiment à liquide (16).

**4.** Accumulateur pneumatique à piston selon la revendication 3,

**caractérisé en ce que**
le couvercle d'obturation des gaz (26) présente une ouverture (30) pouvant être obturée.

5. Accumulateur pneumatique à piston selon la revendication 4,
**caractérisé en ce que**
l'ouverture (30) dans le couvercle d'obturation des gaz (26) peut être obturée de manière étanche aux gaz avec un bouchon d'obturation (32) au moyen d'un procédé de soudure par friction ou par décharge de condensateur.

6. Accumulateur pneumatique à piston selon l'une quelconque des revendications précédentes,
**caractérisé en ce que**
le piston (12) est muni de deux joints d'étanchéité (34, 38 ; 36, 40), qui comprennent respectivement une bague d'étanchéité (34, 36) et une bague d'appui/de roulement (38, 40).

7. Accumulateur pneumatique à piston selon la revendication 6,
**caractérisé en ce que**
la rainure (18) pour recueillir les liquides est formée comme une rainure annulaire entre les joints d'étanchéité (34, 38 ; 36, 40).

8. Accumulateur pneumatique à piston selon l'une quelconque des revendications précédentes,
**caractérisé en ce que**
l'ouverture (20) du boîtier (10), permettant de remplir la rainure (18), peut être fermée par un bouchon d'obturation (42) par un procédé de soudure par friction ou par décharge de condensateur.

9. Accumulateur pneumatique à piston selon l'une quelconque des revendications précédentes,
**caractérisé en ce que**
l'ouverture (20) du boîtier (10), permettant de remplir la rainure (18), sert à faire le vide dans la rainure (18) avant de la remplir.

10. Accumulateur pneumatique à piston selon l'une quelconque des revendications précédentes,
**caractérisé par**
des moyens d'étanchéité (44) prévus sur le côté frontal du piston (12) tourné vers le compartiment à liquide (16), et qui empêchent le gaz de pénétrer dans un système relié à l'accumulateur pneumatique en cas de chute de pression dans le compartiment à liquide.

11. Procédé pour préparer un accumulateur pneumatique à piston comportant un boîtier (10) essentiellement cylindrique et un piston (12) mobile en sens axial à l'intérieur du boîtier (10), et qui subdivise l'intérieur du boîtier (10) en un compartiment à gaz (14) et un compartiment à liquide (16), la surface de la gaine du piston (12) étant munie d'une rainure (18) pour recueillir le liquide,
**caractérisé en ce qu'**
on remplit la rainure (18) par au moins une ouverture (20) du boîtier (10) et on ferme ensuite l'ouverture (20) de manière étanche.

12. Procédé selon la revendication 11,
**caractérisé en ce qu'**
on met sous vide la rainure (18) par l'au moins une ouverture (20) du boîtier (10), avant de la remplir par l'au moins une ouverture (20) du boîtier (10).

13. Procédé selon la revendication 11 ou 12,
**caractérisé en ce qu'**
on ferme l'au moins une ouverture (20) par un procédé de soudure par friction ou par décharge de condensateur après le remplissage de la rainure (18) par l'au moins une ouverture (20).

14. Procédé selon l'une quelconque des revendications 11 à 13,
**caractérisé en ce qu'**
on remplit le compartiment à gaz (14) par une ouverture (30) dans un couvercle d'obturation des gaz (26), et on ferme l'ouverture (30) dans le couvercle d'obturation des gaz (26) de manière étanche aux gaz par un bouchon d'obturation (32) par un procédé de soudure par friction ou par décharge de condensateur.

Fig.1

Fig.2

Fig.3

Fig.4

Fig.5